Europäisches Patentamt

European Patent Office

Office européen des brevets

Publication number: **0 317 061**

**A2**

# EUROPEAN PATENT APPLICATION

Application number: 88308999.7

Int. Cl.⁴ **G01F 15/00**

Date of filing: 29.09.88

Priority: 29.09.87 GB 8722781
19.10.87 GB 8724402
05.11.87 GB 8726017
11.12.87 GB 8728946
16.01.88 GB 8801157
21.05.88 GB 8812078

Date of publication of application:
24.05.89 Bulletin 89/21

Designated Contracting States:
BE DE FR GB NL

Applicant: **Evans, Gerald John**
**Shortlands 22 Cambridge Road**
**Clevedon Avon BS21 7DN(GB)**

Inventor: **Evans, Gerald John**
**Shortlands 22 Cambridge Road**
**Clevedon Avon BS21 7DN(GB)**

Representative: **Calderbank, Thomas Roger et**
**al**
**MEWBURN ELLIS & CO. 2/3 Cursitor Street**
**London EC4A 1BQ(GB)**

## Water metering assembly.

A meter mounting assembly has a meter support plate (11) mounted on a base (10) via pillars 12. Flow-ways (20,25) extend upwardly from the base (10) and engage flow-ways (29,30) extending downwardly from the support plate (11). One of the flow-ways from the plate (11) contains a stop-cock (35) in which the drive spindle (37) rotates, but does not move axially, and the valve spindle (40) moves axially but does not rotate.

A meter unit (54,55,57) in a casing (60) is supported on the support plate, meter unit (54,55,57) being clamped in the casing (60) by the action of a locking ring (62) which has apertures (65) for flow-ways. Between the stop-cock (35) and the flow-ways (53) to the meter unit (54,55,57) is a turbulence reducing chamber (51).

The mounting of the meter unit (54,55,57) is designed so that it may be used, with differently configured components, for different meters. The resulting assembly is easy to dismantle for repairs.

## WATER METERING ASSEMBLY

The present invention relates to water metering, and is concerned with an assembly for supporting a water meter. The present invention is concerned with several different aspects of that assembly, which will be discussed in more detail below.

The change from water costing based on rateable values to water costing based on metering is something which has required development of satisfactory water meters for domestic purposes. It is envisaged that such meters will normally be buried in the pavement outside each house at the curtlidge, and therefore a meter assembly is needed which can be used satisfactorily. It is envisaged that the metering assembly will be sunk in a hole in the ground, connected to the water supply pipe to the house or other premises, and therefore the parts of the meter unit will have to be accessible from above. It is particularly important, therefore, that not only can the meter be read from above, but maintenance can be carried out on the meter unit and parts of the meter assembly without having to re-dig the hole for the meter assembly. Of course the meter assembly will normally have a casing enclosing it when it is below ground, but it is desirable that that casing should not be too large, and this will restrict access to the meter assembly.

Therefore, a first aspect of the present invention seeks to provide a meter mounting assembly which is easy to dismantle. This first aspect proposes that the meter mounting assembly has a base and a meter support plate on which the meter is mounted. Extending between the base and the support plate is at least one, preferably more, pillars, to which the support plate is engaged by suitable engagement means. If this engagement means is a screw or bolt extending through the support plate into the pillar, it can be seen that by removal of the screws or bolts, the support plate may be lifted off the pillars. Then, it has been appreciated that if the base and support plate then have flow-ways which mutually engage telescopically, it is possible to achieve a satisfactory assembly. The flow-ways on the base will be connected to the water pipe to the house, and the flow-ways on the support plate will communicate with the meter. Thus, by removing the support plate, it is possible to remove the meter, and its associated flow-ways, simply by lifting those flow-ways from the flow-ways on the base. Since the flow-ways in the base may be made relatively simple, at least partially because they do not need to be in screw engagement with the flow-ways of the support plate, they are unlikely to fail, and thus lifting the meter support plate from its pillars will enable routine maintenance to be carried out outside the hole in which the assembly was located.

As was mentioned above, if the engagement means is a screw extending through the support plate, the screw can be removed from above the support plate, and the plate and its associated flow-ways lifted off the base. Access to the parts of the assembly below the support plate is thus not required to remove that plate.

Since it is likely that the meter will be in a unit screwed onto the support plate, and there will also be a stop-cock on the support plate, torsional stresses may be applied to that support plate when it is mounted on the base. For this reason, it is desirable if the pillars increase in cross-section towards the base, as that makes them more easily able to resist the torsional strain imposed.

It may also be possible, by suitable design of the pillars and suitable telescoping of the flow-ways, to make adjustable the height of the support plate above the base. For example, the support plate may be supported by a ring threaded on the or each pillar on which the plate rests and is held in place by another ring clamping the plate from above.

When placed in the ground, the assembly will usually be located in an outer casing, and indeed by securing this casing to the base, and providing suitable lugs on the inside of the casing, the casing can act as the "pillar" of this first aspect of the present invention.

Normally, the meter mounting assembly will have a stop-cock in the flow-ways from the mains supply to the meter so that the water supply may be shut-off if the meter is to be removed from the rest of the assembly for e.g. repair, etc. This stop-cock may be a standard one, but a second, independent, aspect of the present invention is concerned with a design which has been found to be particularly advantageous. Firstly, in a stop-cock or other water shut-off valve, one of the causes of leaks is wear of the sealing washer which is forced into sealing contact with a valve seat of the stop-cock. In standard stop-cocks, the valve seat is mounted on a screw-threaded spindle which rotates as it moves towards the valve seat so that the O-rings which seal the contact between the flow-way and the valve spindle involves a measure of rotation. This rotation can cause wear. Therefore, there have been proposals for the valve spindle, supporting the O-rings, to be designed so that it moves axially, but a part does not rotate, so that the O-rings maintain non-rotating contact with the walls of the flow-way. In general, this is achieved by having the valve spindle rotatable relative to the drive spindle of the stop-cock, so that the drive spindle then moves both rotationally and axially, into and out of the stop-cock headworks and the valve spindle moves axially only, rotating relative to the drive spindle. However, if the meter mounting assembly is in a hole in the ground, it is less desirable for the drive spindle of the stop-cock to move axially, because then it moves even deeper into the ground and makes it harder to operate, particularly at the point at which sealing of the stop-cock occurs.

Therefore, in the second aspect of the present invention, the drive spindle is mounted in the headworks of the stop-cock so that it can rotate, but does not move axially. Then, the valve spindle is supported on the drive spindle in the flow way containing the valve seat, so that it is rotatable relative to the drive spindle, e.g. by having the valve spindle screw-threaded onto the drive spindle. It is then necessary to constrain the valve spindle so that it does not rotate relative to the flow-ways. As a result, the valve spindle moves up and down the threaded part of the drive spindle, into and out of sealing engagement with the valve seat, without rotation. There is thus less wear of the O-rings or other seals between the valve spindle and the flow-way.

The problem then is to assemble the valve and drive spindles. The part that prevents the valve spindle from rotating cannot form part of the headworks which support the drive spindle, since otherwise it is not possible to screw the valve spindle onto the drive spindle, since the component which prevents it rotating in use will also prevent it being fitted. Equally, it is difficult to have the part preventing rotation of the valve spindle as part of the flow-way, since the valve spindle normally has to be substantially the width of that flow-way for a seal to be achieved. Therefore, it is further proposed that a guide be provided which receives a part of the valve spindle in a non-rotating matter. That guide can be loose when the valve spindle is fitted to the drive spindle, so that rotation of the valve spindle on the threads of the drive spindle is not restricted, but then the guide is clamped, e.g. between the flow-way stem and the headworks, so that it cannot rotate when the stop-cock is in use. Thus, a simple construction permits both advantages of a non-rotating valve spindle and a drive spindle which does not move axially.

Any stop-cock inevitably involves restriction of the water-flow way in the meter support assembly, and this can introduce turbulence and consequent pressure loss. To overcome this, in a further aspect, the present invention proposes that the outlet from the stop-cock be in communication with a relatively large chamber, with a small outlet. Turbulence occurs within the large chamber, but since the extent of that turbulence will then be less than the extent of the outlet from the chamber, the flow from that outlet will be less turbulent. The outlet from the chamber will then normally lead to the meter unit, and since there will then be less turbulence in the meter unit, not only will the meter reading be more accurate, but also the pressure loss throughout the assembly will be reduced.

The other two aspects of the present invention are concerned with the mounting of the meter unit.

In general, a meter unit for water metering has a turbine which is driven by movement of the water and a meter display component which is driven by the turbine and produces a reading of water passing the meter. Normally, the turbine and the display unit are coupled electro-magnetically, since water must not reach the display unit. Many designs of meter are known, but in general most have at least the outlet at the end remote from the display, and some also have the inlet axially around it (e.g. the Kent MSM). The problem, however, is that different meters from different manufacturers are differently sized, and thus there is little or not interchangeability.

In the fourth aspect of the present invention, however, this problem is overcome, or at least ameliorated, by providing a series of components which enable adaptation of the system to different meter units. In each case, there is a meter cradle (which may be part of the meter support plate discussed above), in which there are two flow-ways which may be connected to e.g. the mains water supply. There is then one series of components, each of which is adapted to engage one of the flow-ways, and in each case is adapted to connect to the outlet of a meter unit. The need then is to connect the meter to the second flow-way of the cradle, and again a series of components are provided, for connecting a corresponding meter design. If the meter has its inlet at the sides, then a hollow cover may be provided which fits over the meter and engages the cradle to define a flow-way between the walls of the meter unit and the cover. Alternatively, for those meter designs where the inlet extends circumferentially around the outlet, a different component may be provided which fits around that outlet, and again engages the cradle. In the latter case, the component will also support the meter unit on the cradle.

In each case there may be a standard locking ring for locking the component to the cradle. Preferably, this locking ring is removable upwardly on the meter unit and parts (e.g. the casing) associated therewith. In this way, the removal of the locking ring from its engagement with the support plate can be achieved from above the support plate, permitting removal of the meter unit without dismantling the rest of the assembly.

Finally, the fifth aspect of the present invention is concerned with the situation discussed above, in which the meter unit fits into a hollow casing. This aspect of the invention, although it is linked to the aspect of the meter cradle assembly, is an independent aspect of the present invention. In this fifth aspect, it is proposed that a locking ring be provided which engages the inner walls of the casing, but is movable axially, e.g. on a screw thread. The movement of that locking ring may then trap the meter unit within the casing, so that the locking ring will assist in the sealing of the meter unit to the casing. This is important where the meter unit and casing define therebetween a flow-way. Since that flow-way must debouch from the casing, the locking ring will have at least one opening to permit fluid flow therethrough to the passageway.

Embodiments of the invention will now be described in detail, by way of example, with reference to the accompanying drawings, in which:

Fig. 1 shows a general view, partially in section of a meter mounting assembly according to a first embodiment of the present invention;

Figs. 2a and 2b show sectional views along the line A-A and B-B in Fig. 1;

Fig. 3 shows a sectional view of the assembly of Fig. 1, along the line C-C in Fig. 1;

Fig. 4 shows a sectional view along the line D-D in Fig. 3;

Fig. 5 is a view corresponding to Fig. 3 but with the meter mounting assembly in the ground; and

Fig. 6 shows a detail of a meter mounting assembly being a second embodiment of the present invention.

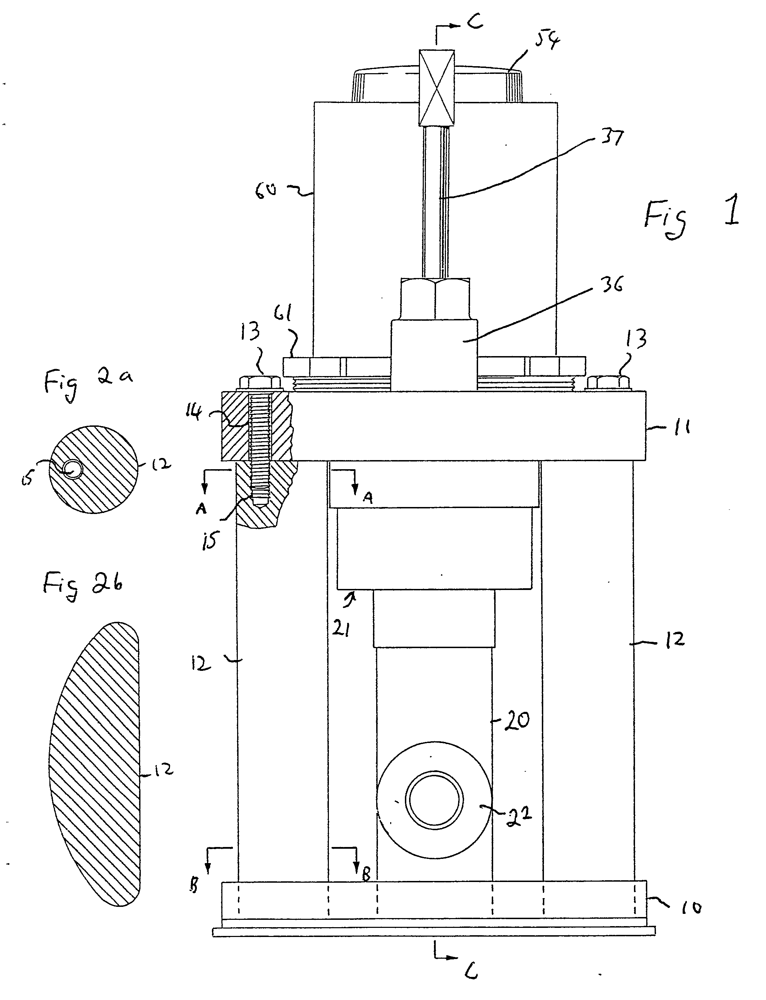

Referring first to Fig. 1 a meter mounting assembly comprises a base 10 and a meter support plate 11. Pillars 12 extend from the base 10, to support the support plate 11 above the base 10. For simplicity, the pillars 12 may be moulded integrally with the base 10 to achieve satisfactory rigidity or other mounting methods may be used. As can be seen from Fig. 1, the support plate 11 engages the top of the pillars via bolts 13 which extend through corresponding aperatures 14 in the support plate 11, and are received in threaded bores 15 in the pillars. Thus, the bolts 13 clamp the support plate to the pillars.

Since various screw-threaded components are fitted to the support plate 11, it will receive torsional stresses and for this reason the pillars 12 widen as they approach the base. This is shown by the sectional views of Figs. 2a and 2b.

Also visible in Fig. 1 is an upstanding flow-way 20, which communicates with a flow-way cover 21 extending downwardly from the support plate 11 in a manner that will be discussed in more detail later. The upwardly extending flow-way 20 has an inlet 22. Above the support plate 11 is the headworks 36 receiving a drive spindle 37 of a stopcock, and a meter unit casing 60 secured to the support plate 11 via a locking ring 61 and having a meter display unit 54 projecting therefrom.

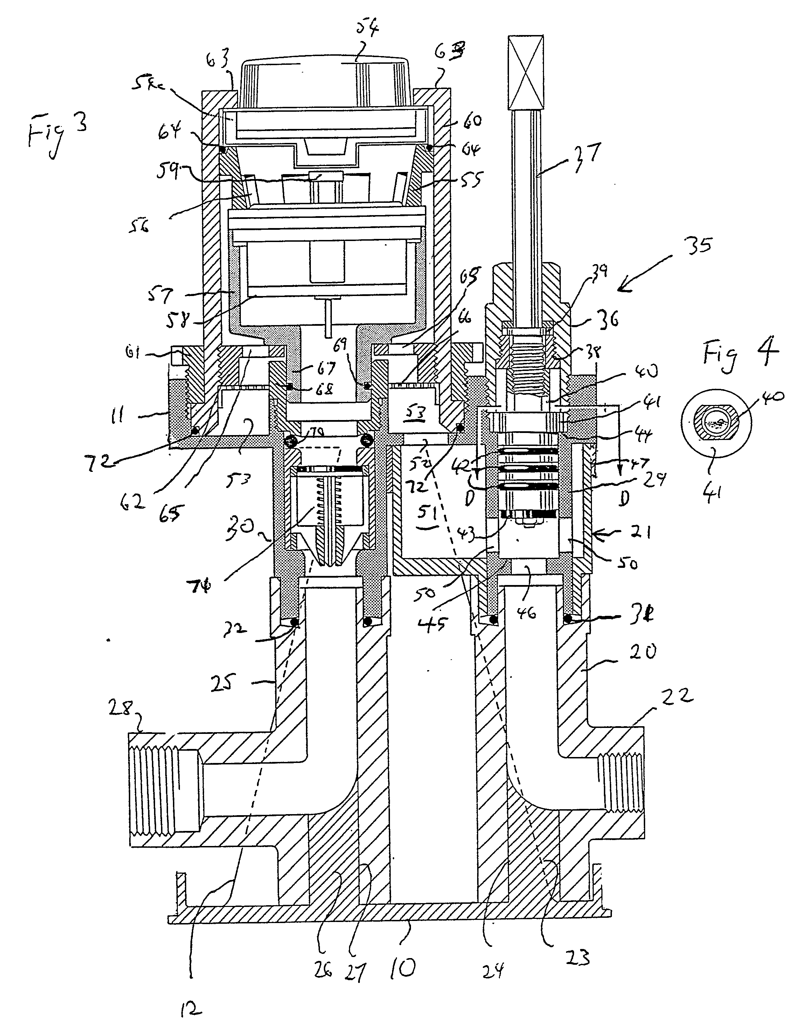

Fig. 3 shows the structure of the meter mounting assembly in more detail. It can be seen there that the upwardly extending flow-way 20 is fitted on the base 10 via an upwardly extending lug 23 which fits in a corresponding bore 24 at the bottom of the flow-way 20.

There is also a second upstanding flow-way 25, again which is mounted on the base 10 via means of a lug 26 and bore 27, and has an outlet 28. Of course, it would be possible to mould the inlet 20 and outlet 25 integrally with the base 10.

A pair of flow-ways 29,30 extend downwardly from the support plate 11, and engage the upwardly extending flow- ways 20,25 respectively. As illustrated, the flow-ways 29,30 are integral with the support plate 11 and the integral unit may be formed by injection moulding. Alternatively, the flow-ways 29,30 may be solvent welded onto the plate 11. It can be seen that the downwardly extending flow-ways 29,30 are in telescopic engagement with the upstanding flow-ways 20,25, and sealed by O-rings seals 31,32. It can be appreciated that the clamping effect of the support plate 11 on the pillars 12 by means of bolts 13 causes the telescopically engaged flow-ways 20,29 and 25,30 to be moved axially to compress the seals 31,32 and so seal together the flow-ways.

The water flow path from the inlet 22 through the flow-ways 20 and 29 then passes to a stopcock generally indicated at 35. This stop-cock 35 includes headworks 36 and drive spindle 37 visible in Fig. 1, but it can be seen from Fig. 3 that the headworks 36 is screwed into the support plate 11 directly above the flow-way 29 so that part of the flow-way 29 and the adjacent parts of the support plate 11 forms a flow-way stem.

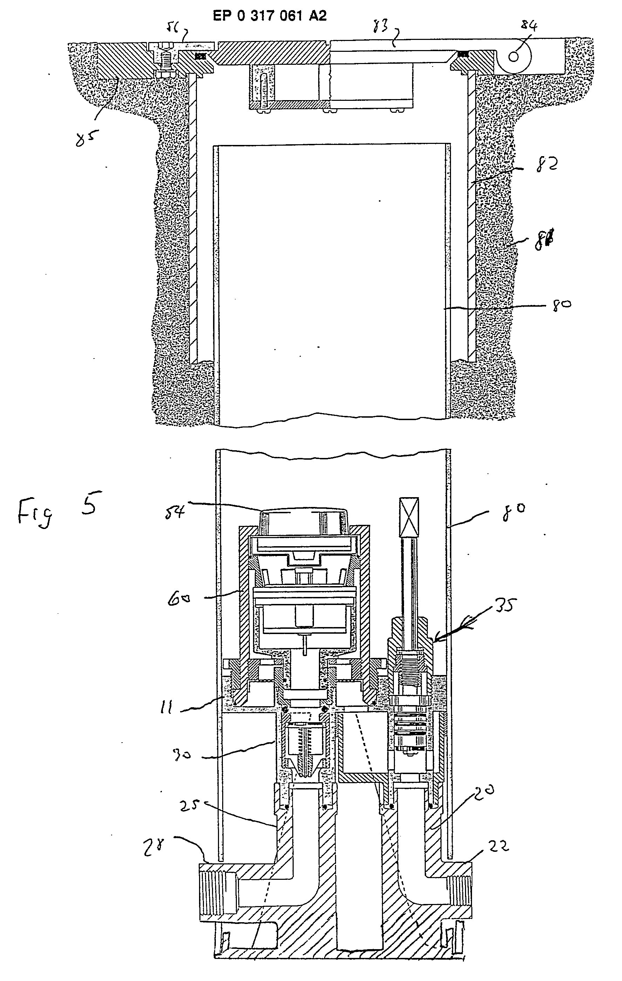

The drive spindle 37 is secured into the headworks 36 by the engagement of a locking ring 38, screwed into the headworks 36, and a flange 39 on the drive spindle 37. Thus, the drive spindle 37 can rotate in the headworks 36, but cannot move axially. A valve spindle 40 is screwed onto the end of the drive stem 37, and extends through a guide 41 into the flow-way 29 to which it is sealed by O-rings 42. The valve spindle 40 terminates in a washer 43. As can be seen in Fig. 4, the guide 41 has a non-circular hole through which the valve spindle 40 passes, so that the valve spindle 40 cannot rotate in the guide 41. Of course, alternative arrangements such as those in which the valve spindle is hexagonal as it passes through a corresponding hexagonal opening in the guide 41 are possible. The guide 41 is clamped between the headworks 36 and a shoulder 44 in support plate 11 directly above the flow-way 29. As a result, when the drive spindle 37 is turned, the valve spindle 40 cannot rotate, but instead screws up and down the drive spindle 37. The valve spindle 40 thus moves axially in the flow-way 29, and the length of the movement is such that the washer 43 may be brought into contact with a valve seat 45 surrounding an opening 46 that communicates with the inlet flow-way 20.

The separation of the guide 41 from the headworks 36 and support plate 11 is important, because it allows the valve spindle 40 to be screwed onto the drive spindle 37 before the headworks 36 is mounted on the support plate 11. Screwing the valve spindle 40 and drive spindle 37 together requires axial movement of the valve spindle 40 relative to the headworks 36, and this could not occur to the extent necessary if the guide 41 was secured to the headworks, because then the non-circular part of the valve stem could not enter the corresponding hole in the guide 41 by rotation.

Thus, during assembly of the stop-cock, the guide 41 is free to rotate with the valve spindle 40 as it is screwed onto the drive spindle 37, but once the headworks 36 has been screwed onto the support plate 11, the guide 41 is clamped and so cannot rotate, as this prevents rotation of the valve spindle 40. As a result, the washer 43 makes non-rotational contact with the valve seat 45 and the O-rings 42 do not rotate relative to the flow-way 29 and so wear is reduced.

As can be seen from Fig. 3, movement of the valve spindle 40 away from the valve seat 45 permits water to pass through the opening 46, and then out of the flow-way 29 via openings 50. These openings 50 communicate with the interior of the flow-way cover 21 visible in Fig. 1. This flow-way cover 21 is important because a chamber 51 is defined therein which reduces turbulence. As the water passes into the chamber 51 from the openings 50, it is extremely turbulent. That turbulence, however, is taken up in the chamber 51 and does not pass through the outlet 52 to that chamber to a flow-way part 53 within the support plate 11. Hence, the chamber 51 within the flow-way cover 21 reduces turbulence because of its large dimensions relative to the openings 50 and 52. The flow-way cover 21 may be solvent-welded onto the bottom of the cover plate 11 and to the flow-way 29; and the cover plate 11 may be provided with a flange 47 for this purpose. Alternatively, other mounting methods may be used, provided that a satisfactory seal is achieved.

Once the water has reached the flow-way 53, it then passes to the meter unit.

As illustrated in Fig. 3, the meter unit comprises four parts. Firstly, at the top, there is a meter display component 54 which displays information concerning the amount of water that the meter unit has read and has a brass pressure plate 54a on the bottom thereof. Below that pressure plate 54a is a ring component 55 with a plurality of holes 56 therein to permit water to pass therethrough. Below the ring 55 is the turbine component 57 which rotates as water passes the turbine 58. A magnetic drive 59 on the end of the turbine projects upwardly into the ring 55, and is in electromagnetic engagement with a corresponding drive of the display unit 54. These four components 54,54a,55, and 57 of the meter unit are contained within a hollow casing 60. This casing 60 is received in a recess in the support plate 11 and is secured thereto by a locking ring 61, so that a meter cradle assembly is effectively formed. It should be noted that the interior of the casing 60, surrounding the meter unit, communicates with the flow-way 53, so that a further flow-way is formed between the casing 60 and the meter unit, so that water can pass therebetween, up the casing, and through the holes 56 in the ring 55 to reach the turbine 58.

The meter unit is held in place within the casing 60 by a locking ring 62 which screws into the casing 60, and forces the components of the meter unit upwardly to bear against each other and against the lips 63 at the top of the casing 60, which together with seals 64 seal the flow-way between the casing 60 and the meter unit adjacent the pressure plate 54a. The locking ring 62 has openings 65 therein to permit water to pass that ring. This clamping of the meter unit in the casing 60 is an important feature, since it permits easy removal of the meter unit components 54,54a,55, and 57. Also shown in Fig. 3 is a filter 66 directly below the locking ring 62.

The turbine component 57 of the meter unit has a downwardly extending outlet 67 which is in telescopic engagement with a ring 68 which is screwed into the support plate 11 directly above the flow-way 30. Seals 69,70 ensure no leakage, and thus a direct flow passage is defined between the outlet 67 of the turbine component 57 (and hence of the meter unit) and the flow-way 30

Finally, Fig. 3 shows that flow-way 30 contains a check-valve 71 to prevent back-siphonage of water into the meter unit and there is a seal 72 between the casing 60 and the part of the cover plate 11 forming the seater cradle, to prevent water leakage.

Fig. 5 of the accompanying drawing shows the meter mounting assembly of Fig. 3, located in the ground. The meter mounting assembly shown in Fig. 5 is virtually identical to that in Fig 3, and so not every feature of the assembly is illustrated. However. in Fig. 5 the upwardly extending flow-ways 20.25 are integrally moulded with the base.

As can be seen. the meter mounting assembly is contained within an outer casing 80 below ground 81. The length of the casing 80 will depend on the depth to which the meter mounting assembly is to be positioned. which will depend on the depth of the water pipes (not shown) to which it is connected. The outer casing 80 has a cover, in the form of an outer ring 82 which fits over the casing 80. and supports a lid 83 mounted a hinge 84 on a ring 85 supported on the cover 82. A suitable locking mechanism 86 may be provided to hold down the lid 83 for times when access to the meter mounting assembly is not needed.

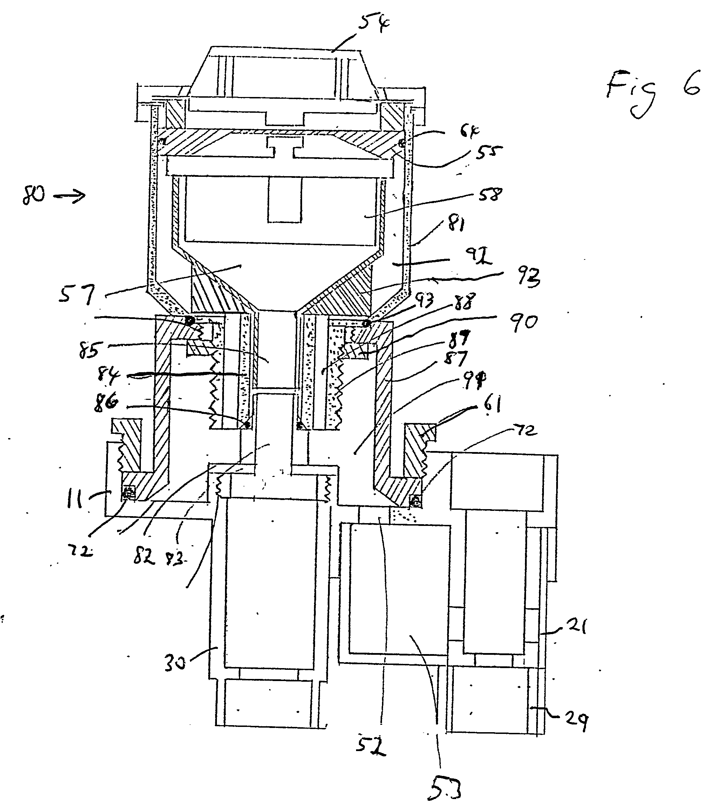

Fig. 6 shows part of a second embodiment of the present invention. This embodiment differs from that of Fig. 3 only in the structure of the meter unit and the structure by which the meter unit is mounted on the support plate 11, and parts of the meter mounting assembly other than those shown in Fig. 6 may be identical to those shown in Fig. 3. Indeed. some components of Fig. 6 are identical to those in Fig. 3. and the same reference numerals have been used where appropriate. In this embodiment, however, the meter unit generally indicated at 80 is a commercially available one known as the Kent MSM. in which the meter display unit 54, the ring 55. and the turbine unit 57 are mounted in a casing 81 to form an integral structure. In this structure. the inlet and outlet are axial, and at the bottom of the meter unit 80, and so the system for mounting the meter unit on the support plate 11 cannot be the same as that shown in Fig. 3. However, it is possible readily to adapt the structure shown in Fig. 3 to this different meter design. Firstly. the ring 68 shown in Fig. 3 is replaced by a ring 82 which similarly screws into the support plate 11 to communicate with the flow-way 30, but has a different configuration so that it has an upstanding bore 83 which telescopically engages the tube 84. which contains the outlet 85 of the turbine component 57. Seals 86 are provided between the upstanding bore 83 and the tube 84 to provide a satisfactory seal. Thus, an outlet from the meter unit 80 is constructed.

Since the casing 81 is differently shaped from the casing 60 shown in Fig. 3, it cannot be mounted to the support plate 11 in the same way. Instead. a further component 87 is provided which is receivable in the support plate 11 and is secured to the casing 81 via the locking ring 61 (which may be identical to that shown in Fig. 3). Then, the locking ring 61 holds the ring 86 onto the support plate 11. It can be seen in Fig. 6 that the meter unit has an inlet flow-way 88 surrounding the outlet 85, the wall 89 bounding the inlet flow-way 88 being threaded to engage a ring 90 which clamps the wall 89, and hence the meter unit 80. to the component 87. Thus. there is communication from the opening 52 to the interior space 91 within the component 87. and via the inlet flow-way 88. to bottom of the meter unit 80. and so the system for mounting the meter unit on the support plate 11 cannot be the same as that shown in Fig. 3. However, it is possible readily to adapt the structure shown in Fig. 3 to this different meter design. Firstly, the ring 68 shown in Fig. 3 is replaced by a ring 82 which similarly screws into the support plate 11 to communicate with the flow-way 30. but has a different configuration so that it has an upstanding bore 83 which telescopically engages the tube 84, which contains the outlet 85 of the turbine component 57. Seals 86 are provided between the upstanding bore 83 and the tube 84 to provide a satisfactory seal. Thus, an outlet from the meter unit 80 is constructed.

Since the casing 81 is differently shaped from the casing 60 shown in Fig. 3, it cannot be mounted to the support plate 11 in the same way. Instead, a further component 87 is provided which is receivable in the support plate 11 and is secured to the casing 81 via the locking ring 61 (which may be identical to that shown in Fig. 3). Then, the locking ring 61 holds the ring 86 onto the support plate 11. It can be seen in Fig. 6 that the meter unit has an inlet flow-way 88 surrounding the outlet 85, the wall 89 bounding the inlet flow-way 88 being threaded to engage a ring 90 which clamps the wall 89, and hence the meter unit 80, to the component 87. Thus, there is communication from the opening 52 to the interior space 91 within the component 87, and via the inlet flow-way 88. to a flow-way 92 inside the casing 81 which leads to the ring 55, and hence to the interior of the turbine unit 57. It should be noted that the supports 93 within the meter unit 80 have passages therethrough (not shown in Fig. 6) to permit water to flow from the flow-way 88 to the flow-way 81.

As illustrated in Fig. 6. component 87 supports the meter unit 80 above the support plate 11. and the meter unit 80 is sealed to the component 87 by seals 94.

It can be seen in Fig. 6 that removal of the locking ring 61 permits the meter unit 81 and component 87 to be removed from the support plate 11, with access to the top of that support plate 11 only. The tube 84 is released from the upstanding bore 83 due to their telescopic engagement. Then, with the meter unit 80 and component 87 removed from the support plate 11. the meter unit 80 and component 87 can be separated by removal of ring 90.

It can thus be appreciated that from comparison of Figs. 3 and 6 a series of components may be provided to conform the connection of the outlet of whichever meter unit is used to the passageway 30, and to conform the inlet of the meter to communicate with the opening 52. In the case shown in Fig. 6, the ring 87 also has the purpose of supporting the meter unit 80, since there is no locking engagement between the casing 81 and the ring 61 as in Fig. 3.

## Claims

1. A meter mounting assembly, comprising:
a base having a pair of upstanding flow-ways and at least one upstanding pillar; and
a meter support plate having a pair of downwardly extending flow-ways sealed in telescopic engagement with the upstanding flow-ways of the base, and a means engaging the at least one pillar for securing together the meter support plate and the base.

2. An assembly according to claim 1, wherein the pillars increase in cross-section towards the base.

3. An assembly according to claim 1 or claim 2 wherein one of the downwardly extending flow-ways forms part of a stop-cock.

4. An assembly according to claim 3, wherein the stop-cock comprises:
a flow-way stem, being part of said one flow-way, the flow-way stem containing a valve seat;
a headworks mounted on the flow way stem;
a drive spindle mounted in the headworks so as to be rotatable, but non-slidable axially;
a valve spindle in the flow-way, the valve spindle engaging the drive spindle such as to be rotatable and movable axially relative to the drive spindle; and
a guide releasably held by the flow-way stem and/or the headworks, the guide engaging the valve spindle so as to prevent relative rotation of the valve spindle and guide;
whereby rotational movement of the drive spindle causes axial movement of the valve spindle towards and away from the valve seat.

5. An assembly according to any one of the preceding claims, wherein the meter support plate has a meter cradle receiving a meter unit, the meter cradle communicating with the downwardly extending flow-ways.

6. An assembly according to claim 5, wherein the meter unit is mounted in a hollow casing, which casing engages the meter cradle.

7. An assembly according to claim 6 wherein the casing engages the meter cradle via a ring, which ring is removable from the cradle to release the casing, the ring being on the opposite side of the support plate from the base.

8. An assembly according to any one of the preceding claims, wherein the engagement of the support plate and the pillar(s) is releasable from the opposite side of the support plate to the base.

9. A metering mounting assembly, comprising:
a hollow casing having a bearing surface;
a meter unit mounted in the casing to define a first flow-way between the casing and the meter unit; and
a clamping ring engaging and being axially movable in the casing to bear against a part of the meter unit and to force another part of the meter unit into contact with a part of the casing thereby to seal the flow-way between the casing and the meter unit, the clamping ring having at least one aperture for fluid communication to the flow-way through the clamping ring.

10. A meter mounting assembly according to claim 9, wherein the meter unit has a further flow-way extending therefrom through a further aperture in the clamping ring.

11. A meter mounting assembly according to claim 9 or claim 10, wherein the meter unit has a plurality of separable components held together by the clamping effect of the clamping ring and the casing.

12. A stop-cock comprising:
a flow-way stem containing a valve seat;
a headworks mounted on the flow way stem;
a drive spindle mounted in the headworks so as to be rotatable, but non-slidable axially;
a valve spindle in the flow-way, the valve spindle engaging the drive spindle such as to be rotatable and movable axially relative to the drive spindle, and
a guide releasably held by the flow-way stem and/or the headworks, the guide engaging the valve spindle so as to prevent relative rotation of the valve spindle and guide;
whereby rotational movement of the drive spindle causes axial movement of the valve spindle towards and away from the valve seat.

13. A stop-cock according to claim 12, wherein the drive and valve spindles are screw-threaded together.

14. A meter cradle assembly providing for meter unit interchangeability, comprising:
a support having a pair of flow-ways extending therefrom;
a plurality of first components adapted interchangeably to engage one of the flow-ways of the support, and each having differently sized meter unit engaging parts remote from the one flow-way engagement to engage a first flow-way of the meter unit;
a plurality of interchangeable second components, each adapted to engage a corresponding one of the meter units and the support, to define, together with the meter unit a second flow-way of the meter unit in communication with the other flow-way of the support.

15. A meter cradle assembly according to claim 14. wherein the plurality of second components includes a hollow meter unit casing for enclosing a first one meter unit such that the second flow-way of the first meter unit is defined between the first meter unit and the walls of the casing.

16. A meter cradle assembly according to claim 14 or claim 15, wherein the plurality of second components includes a hollow meter unit support for supporting a second one of the meter units on the support and having an aperture therein axially aligned and of diameter greater than the first component for the corresponding meter unit for receiving a second flow way of the second meter unit.

17. A meter mounting assembly having a flow-way containing a valve spindle of a stop-cock, the flow-way having a flow-way outlet, and
a chamber in communication with the flow-way outlet. the chamber having dimensions greater than the transverse dimension of the flow-way outlet, and chamber outlet of transverse dimensions less than the dimensions of the chamber.

Fig 1

Fig 2a

Fig 2b

Fig 3

Fig 4

Fig 5

Fig 6